# EUROPEAN PATENT APPLICATION

(11) **EP 1 842 701 A1**
(43) Date of publication of application: **10.10.2007**
(21) Application number: 07270015.6
(22) Date of filing: 20.03.2007
(51) Int. Cl.: B60G 15/06, F16F 9/54, F16F 9/58, F16F 1/38

(54) **Strut mount assembly**

(30) Priority: 07.04.2006 GB 0606948
(71) Applicant: Ford Global Technologies, LLC, Dearborn, MI 48126 (US)
(72) Inventor: Parr, Jonathan Craig, Coventry CV3 6EH (GB); Horne, Mark William, Coventry CV3 1FW (GB)
(74) Representative: Gicquel, Olivier Yves Gérard

(57) **Abstract**

A strut mount assembly 10 connects the upper end of a shock absorber of a suspension system to a vehicle body structure. The shock absorber has a cylinder and a shouldered piston rod 12 slidably disposed therein. The strut mount assembly includes a lower annular buffer plate 15 and an upper annular buffer plate 16 assembled on the piston rod 11 in such a way that the upper buffer plate 16 is an inverted copy of the lower buffer plate 15. The strut mount assembly further includes a retainer assembly adapted to be mounted on piston rod 12 between the buffer plates 15, 16 and to be attached to the body structure. The retainer assembly includes a sleeve 19 mounted around the piston rod 12, a retainer member 17 having a tubular collar portion 17a, and a shear bush 18 interposed between the retainer member 17 and the sleeve 19. The tubular collar portion 17a is extended radially outwardly from each end by a flange respectively designated a support flange 17b and an attachment flange 17c. The attachment flange 17c is provided with blank holes 17f to allow a spring isolator 32, an upper buffer 34, a lower buffer 31 and the shear bush 18 to be formed as a one-piece member moulded to the retainer member 17 by mould through ports technique. The retainer members 17 can be inverted at the time of the manufacturing allowing the strut mount to be customized for each vehicle type.

## Description

The present invention relates to a strut mount assembly. In particular, the present invention relates to an upper strut mount assembly or shear mount for a strut suspension which is capable of accommodating pivotal movement of the strut during suspension operation (jounce, rebound), while at the same time providing isolation of force inputs to the chassis.

Upper strut mounts are usually made of a number of parts which are assembled through many steps and several mould processes. It is also usually necessary to provide a specific design of strut mount for each type of vehicle to meet dynamic performance, thereby adding tooling cost to each vehicle type. Therefore design, manufacturing and assembly costs are high.

According to a first aspect of the invention there is provided a strut mount assembly for connecting the upper end of a shock absorber of a suspension system to a vehicle body structure, the shock absorber having a cylinder and a shouldered piston rod slidably disposed therein, the strut mount assembly including:
- a lower annular buffer plate for seating on the shoulder of the piston rod,
- an upper annular buffer plate fixable to a top end of the piston rod,
- a retainer assembly adapted to be mounted on the piston rod between the upper buffer plate and the lower buffer plate and to be attached to the body structure, the retainer assembly including a sleeve for receiving the piston rod, a retainer member having a tubular collar portion, and a shear bush interposed between the retainer and the sleeve,
- an upper buffer and a lower buffer interposed respectively between an upper part of the retainer assembly and the upper buffer plate and between a lower part of the retainer assembly and the lower buffer plate, and
- a spring isolator provided on the retainer assembly for receiving a coil spring disposed around the shock absorber, wherein the tubular collar portion is extended radially outwardly from each end by a flange respectively designated a support flange and an attachment flange, one of the flanges having its diameter greater than the diameter of the opposite flange so as to allow, at the time of manufacturing the strut mount assembly, the retainer member to be inverted.

One advantage of the present invention is that by having an inverted retainer member it offers the possibility of adapting the strut mount for different vehicle types from the same basic components, thus reducing the manufacturing costs.

According to a second aspect of the invention there is provided a method of manufacturing a strut mount assembling in accordance with said first aspect, the method comprising the steps of:
a) selecting the fixing position of the retainer member relating to the body structure by inverting the retainer member,
b) providing a pair of buffer plates, a sleeve and a shear bush,
c) moulding the spring isolator, the lower buffer and the upper buffer to one of the followings components: retainer member, upper buffer plate or lower buffer plate, and
d) assembling the components to the piston rod.

The invention will now be described by way of example with reference to the accompanying drawings, of which: -
Fig.1 is a sectional view of a first embodiment of a strut mount assembly in accordance with the present invention;
Fig.2 is a sectional view of a second embodiment of a strut mount assembly according to the invention;
Fig.3 is a sectional view of a third embodiment of a strut mount assembly according to the invention; and
Fig.4 is a sectional view of a fourth embodiment of a strut mount assembly according to the invention.

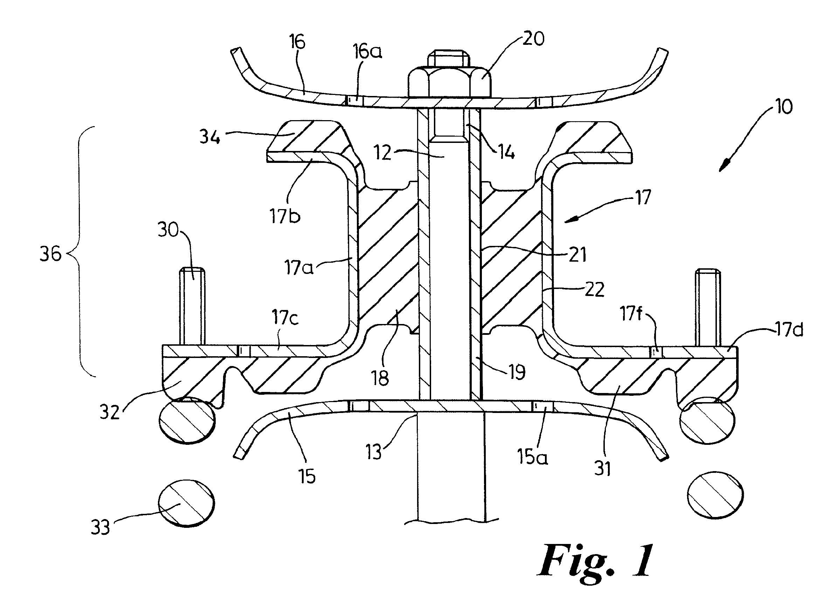

Referring to figure 1, there is shown a strut mount assembly 10 for connecting the upper end of a shock absorber strut of a suspension system to a vehicle body structure. The shock absorber strut includes a cylinder (not shown) and a piston rod 11 slidably disposed therein. The piston rod 11 is terminated at its upper end in a reduced portion 12 forming a shoulder 13 and is screw-threaded at 14. The reduced portion 12 receives the strut mount assembly 10.

The strut mount assembly 10 includes a lower buffer plate 15, an upper buffer plate 16, a retainer member 17 and an elastomeric shear bush 18. The upper plate 16, the lower plate 15 and the mount member 17 are made of sheet metal.

The lower plate 15 and the upper plate 16 are annular plates formed by using press techniques. Each annular plate 15, 16 has its outer edge bent forming a shallow dish-shape and is provided with blank holes 15a, 16a.

The lower buffer plate 15, with its outer edge bent downwardly, is seated against the shoulder 13 of the piston rod 11. A tubular metal sleeve 19 which encircles the reduced portion 12 of the rod rests on the lower buffer plate 15. The sleeve 19 is retained on the piston rod 12 by means of the upper buffer plate 16 which has its outer edge bent upwardly and a top nut 20 fixed at the end of the piston rod 12. As seen, the upper buffer plate 16 is the mirror image of the lower buffer plate 15.

The retainer member 17 is of an annular unitary structure including a tubular collar portion 17a, an upper or support flange 17b extending radially outwardly from the upper edge of the tubular collar portion 17a and a lower or attachment flange 17c extending radially outwardly from the lower edge of the tubular collar portion 17a. The lower flange 17c has an attachment portion 17d for attaching the retainer member 17 to the vehicle body by means of studs 30 extending through openings arranged in the attachment portion 17d. This attachment portion 17d extends the lower flange 17c in such a way that the diameter of the lower flange 17c is greater than the diameter of the upper flange 17b. The shear bush 18 is an annular rubber bushing having an inner and outer circumferential surface 21, 22. The inner surface 21 is bonded to the outer circumferential surface of the sleeve 19. The outer circumferential surface 22 of the shear bush 18 is bonded to the interior surface of the tubular collar portion 17a of the retainer member 17.

The lower flange 17c is also provided against its lower surface with a lower buffer 31 and a spring isolator 32 on which seats a coil spring 33 disposed around the shock absorber. The upper flange 17b has on its upper surface an upper buffer 34. The lower buffer 31, upper buffer 34 and spring isolator 32 are made of a resilient material such as rubber or polyurethane or other elastomeric material.

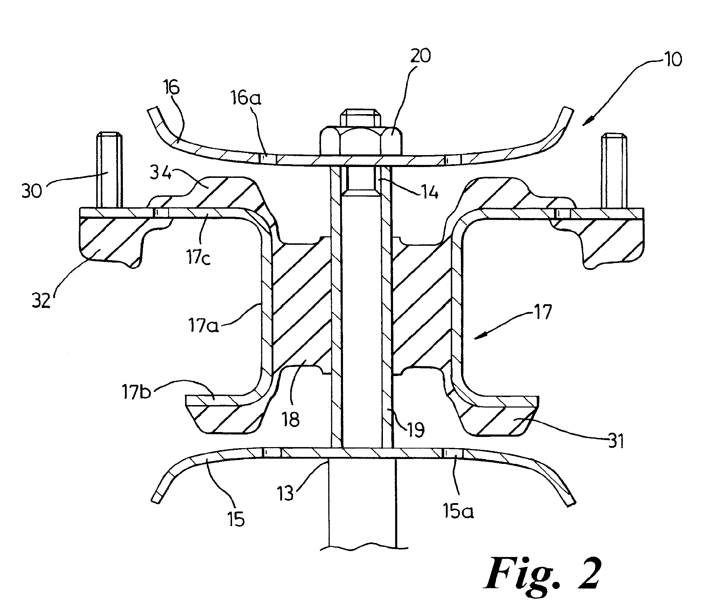

According to this embodiment, the retainer member 17 and the sleeve 19, together with the shear bush 17, the upper buffer 34, the lower buffer 31 and the spring isolator 32 form a retainer assembly 36. The upper buffer 34, the lower buffer 31 and the spring isolator 32 are formed as a single moulding, being moulded directly onto the retainer member 17 and, in the case of the shear bush 18, the collar 19. It will be noted that the lower flange 17c of the retainer member 17 is provided with blank holes 17f which can be used as mould-through ports when the retainer member 17 is used in the alternative embodiment shown in Figs 2 to 4.

To assemble the strut mount assembly 10 to the piston rod 11, the lower buffer plate 15 is fixed to the piston rod 11, the retainer assembly 36 is fixed to the piston rod 11 by inserting the sleeve 18 through the piston rod 11, the upper buffer plate 16 is fitted onto the top of the piston rod 11 and then the nut 20 is threaded on the end of the piston rod 11 until the lower buffer plate 15 is in firm contact with the shoulder 13 of the piston rod 11. The retainer member 17 is attached to the vehicle body by means of the studs 30.

Referring now to Fig.2, there is shown a second embodiment of the present invention, in which the retainer member 17 is inverted. The attachment flange 17c is, in this example, located in the upper part of the strut mount assembly and the support flange 17b is located in the lower part of the strut mount assembly. The spring isolator 32 is bonded to the lower surface of the attachment flange 17c. As described in the first embodiment shown in Fig. 1, the shear bush 18, the upper buffer 34, the lower buffer 31 and the spring isolator 31 are formed as a single unit all together with the retainer member 17 and the sleeve 19 by using only one moulding operation. The blank holes 17f allow the rubber or the mixture of rubber and polyurethane material to flow through the retainer member 17 in order to bind all rubber components (shear bush 18, the upper buffer 34, the lower buffer 31 and the spring isolator 32) together with the retainer member 17.

With this configuration, the strut mount assembly 10 is in part located outside the body structure of the vehicle whereas in Fig.1 the strut mount assembly 10 is located in part inside the body structure. Hence, the invertible retainer member 17 offers the advantage of satisfying more than one package requirement without increasing the manufacturing cost or the number of base components of the strut mount.

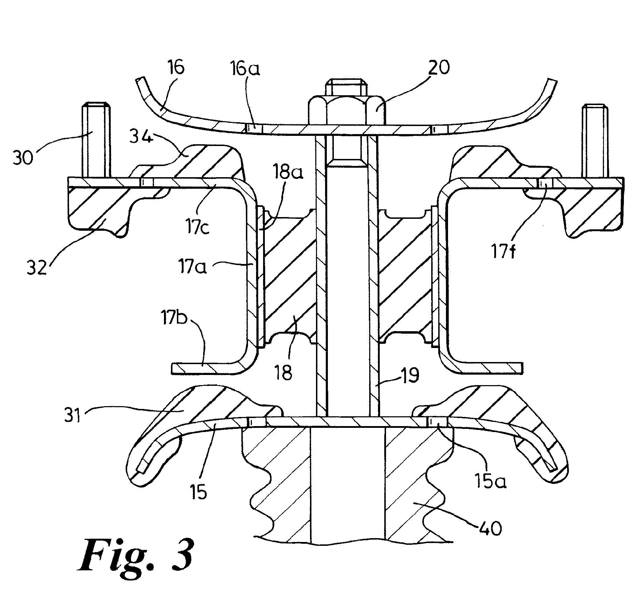

Fig.3 shows a third embodiment of the present invention, in which the lower buffer plate 15 is bonded to a lower buffer 31 arranged in such a way that the support flange 17b abuts the lower buffer 31 when the piston rod 12 is forcibly moved into the cylinder. The lower buffer plate 15 is also provided with a jounce bumper 40 for engagement with the upper end of the cylinder when the piston rod 12 is forcibly moved into the cylinder.

The jounce bumper 40 and the lower buffer 31 are formed as a single piece with the lower buffer plate 15, mould-through ports being provided as blank holes 15a formed in the lower plate 15 in order to allow the resilient material to flow through the lower buffer plate 15.

In a modification, the shear bush 18 is bonded to the sleeve 18 and the retainer 17.

The shear bush 18 has a metal outer sleeve 18a push fitted into the tubular collar portion 17a. As seen in Fig. 3, the upper buffer 34 and the spring isolator are moulded together using the blank holes 17f to allow the material to flow through the retainer.

The assembly of this strut mount assembly is similar to that of the previous embodiment.

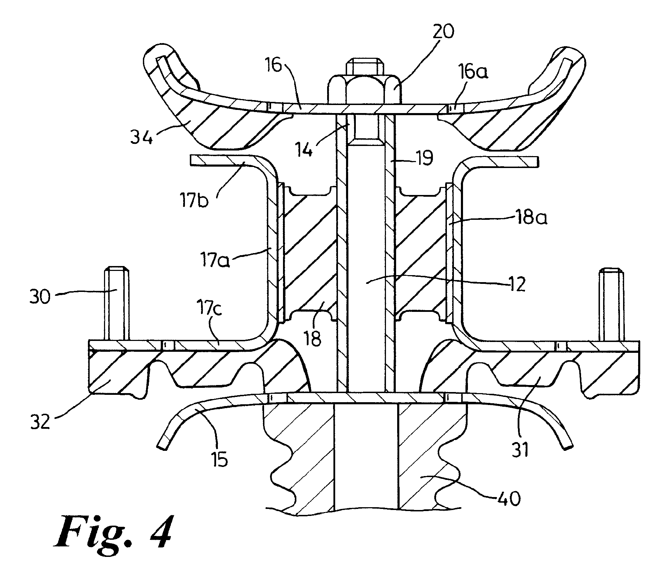

Fig.4 shows a fourth embodiment of the present invention, in which the upper buffer plate 16 is bonded to an upper buffer 34 arranged in such a way that the support flange 17b abuts the upper buffer 34 when the piston rod 12 is forcibly moved out of the cylinder. Also according to this embodiment, the lower buffer 31, the spring isolator 32 and the jounce bumper 40 are connected to the lower buffer plate 15 by moulding in one operation. The spring isolator 32 and the lower buffer 31 abut in their use position the retainer member 17 under the spring force of the coil spring 33. The shear bush 18 is bonded to sleeve 19 by a moulding operation. The shear bush 18 and the sleeve 19 are assembled onto the tubular collar portion 17a. The upper buffer plate 16 is fitted onto the top of the piston rod 12 and then the nut 20 is threaded on the end of the piston rod.

Such a strut mount assembly according to the present invention offers the advantages of reducing assembling steps by using moulding to group functional components. Furthermore, the manufacturing costs are also reduced by having an identical upper buffer plate and a lower buffer plate. In addition, the base components of the strut mount, that is the upper buffer plate, lower buffer plate and invertible retainer member allowing a multitude of designs satisfying package requirement but which can be produced with reduced costs.

It will be noted that the shape and the thickness of the buffers as well as the length of the sleeve 19 can be modified to satisfy dampering requirements, depending on the vehicle type.

## Claims

1. A strut mount assembly (10) for connecting the upper end of a shock absorber of a suspension system to a vehicle body structure, the shock absorber having a cylinder and a shouldered piston rod (12) slidably disposed therein, the strut mount assembly including:
- a lower annular buffer plate (15) for seating on the shoulder (13) of the piston rod (12),
- an upper annular buffer plate (16) fixable to a top end of the piston rod (12),
- a retainer assembly (36) adapted to be mounted on the piston rod between the upper buffer plate (16) and the lower buffer plate (15) and to be attached to the body structure, the retainer assembly (36) including a sleeve (19) for receiving the piston rod (12), a retainer member (17) having a tubular collar portion (17a), and a shear bush (18) interposed between the retainer (17) and the sleeve (19),
- an upper buffer (34) and a lower buffer (31) interposed respectively between an upper part of the retainer assembly (36) and the upper buffer plate (16) and between a lower part of the retainer assembly (36) and the lower buffer plate (15), and
- a spring isolator (32) provided on the retainer assembly (36) for receiving a coil spring (33) disposed around the shock absorber, wherein the tubular collar portion (17a) is extended radially outwardly from each end by a flange respectively designated a support flange (17b) and an attachment flange (17c), one of the flanges having its diameter greater than the diameter of the opposite flange so as to allow, at the time of manufacturing the strut mount assembly, the retainer member (36) to be inverted.

2. A strut mount assembly as claimed in claim 1, in which the buffer plates (15, 16) are substantially identical and assembled on the piston rod (12) in such a way that the upper buffer plate (16) is a mirror image of the lower buffer plate (15).

3. A strut mount assembly as claimed in claim 1, in which the buffers (34, 31), the spring isolator (32) and the shear bush (18) are made of a resilient material such as rubber.

4. A strut mount assembly as claimed in any preceding claim, in which the buffer plates (15, 16) and the retainer member (17) are made of sheet metal and are each provided with blank holes (15a, 16a, 17f) so as to allow the material of the upper buffer (34), the lower buffer (31) or/and the spring isolator (32) to flow through at least one of the followings components: the upper buffer plate (16), the lower buffer plate (15) or the retainer member (17) and be bonded to at least one of said components.

5. A strut mount assembly as claimed in claim 4, in which the spring isolator (32), the upper buffer (34) and the lower buffer (31) are formed as an integral structure moulded to the retainer member (17).

6. A strut mount assembly as claimed in claim 5, in which the shear bush (18) is also formed as an integral structure moulded to the retainer member (17).

7. A strut mount assembly as claimed in claim 4, in which one of the buffers (34, 31) is formed as a one-piece member with its correspondent buffer plate (15, 16).

8. A strut mount assembly as claimed in claim 4, in which a jounce bumper (40) and the lower buffer (31) are formed as a one-piece member to the lower buffer plate (15) by moulding.

9. A strut mount assembly as claimed in any of claims 1 to 4, in which the lower buffer plate (15) has blank holes (15a) to allow the material forming the jounce bumper (40) to flow through the lower buffer plate (15) to form the spring isolator (32) and the lower buffer (31), thus forming a one-piece member which is obtained by a single moulding operation.

10. A strut mount assembly as claimed in any preceding claims, in which the attachment flange (17c) of the retainer member (17) is provided with studs (30) for attaching the retainer assembly (36) to the body structure.

11. A method of manufacturing a strut mount assembling in accordance with any of claims 1 to 10, the method comprising the steps of:
a) selecting the fixing position of the retainer member (17) relating to the body structure by inverting the retainer member (17),
b) providing a pair of buffer plates (15, 16), a sleeve (19) and a shear bush (18),
c) moulding the spring isolator (32), the lower buffer (31) and the upper buffer (34) to one of the followings components: the retainer member (17), the upper buffer plate (16) or the lower buffer plate (15), and
d) assembling the components to the piston rod (12).

12. A method as claimed in claim 11 in which the step c) comprises moulding the shear bush (18), the spring isolator (32), the upper buffer (34) and lower buffer (31) by a single operation to the retainer member (17), with the shear bush (18) being bonded to the sleeve (19).

13. A method as claimed in claim 11 in which the step c) comprises moulding one buffer (34, 31) to one of the buffer plates (15, 16) and moulding the other buffer and the spring isolator to the retainer member.

14. A method as claimed in claim 11 in which the step c) comprises moulding in one moulding operation the spring isolator (32), the lower buffer (31) and the jounce bumper (40) to the lower buffer plate (15).
